(19) Europäisches Patentamt / European Patent Office / Office européen des brevets

(11) **EP 2 736 444 B1**

(12) **EUROPEAN PATENT SPECIFICATION**

(45) Date of publication and mention
of the grant of the patent:
**10.07.2019 Bulletin 2019/28**

(21) Application number: **12738361.0**

(22) Date of filing: **17.07.2012**

(51) Int Cl.:
***A61C 7/20*** *(2006.01)*

(86) International application number:
**PCT/US2012/046994**

(87) International publication number:
**WO 2013/019398 (07.02.2013 Gazette 2013/06)**

(54) **ORTHODONTIC ARCHWIRES WITH REDUCED INTERFERENCE AND RELATED METHODS**

KIEFERORTHOPÄDISCHE BOGENDRÄHTE MIT VERRINGERTER INTERFERENZ UND ZUGEHÖRIGE VERFAHREN

FILS D'ARC ORTHODONTIQUES À INTERFÉRENCE RÉDUITE ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011 US 201161513199 P**

(43) Date of publication of application:
**04.06.2014 Bulletin 2014/23**

(73) Proprietor: **3M Innovative Properties Company
St. Paul, MN 55133-3427 (US)**

(72) Inventors:
• **HANSEN, James D.
Saint Paul, Minnesota 55133-3427 (US)**
• **KIM, Sung
Saint Paul, Minnesota 55133-3427 (US)**
• **PAEHL, Ralf M.
41453 Neuss (DE)**
• **SOO, Philip P.
Saint Paul, Minnesota 55133-3427 (US)**

(74) Representative: **Vossius & Partner
Patentanwälte Rechtsanwälte mbB
Siebertstrasse 3
81675 München (DE)**

(56) References cited:
**US-A- 5 431 562        US-A1- 2003 056 561
US-A1- 2004 072 120      US-A1- 2006 073 436**

**Description**

Field of the Invention

Provided are methods for making customized archwires for use with fixed orthodontic appliances.

Background

Orthodontic therapy is a specialized area of dentistry concerning the supervised treatment of malpositioned (or crooked) teeth. Generally such treatment involves the judicious application of light continuous forces to the teeth using one or more orthodontic appliances. These forces stimulate changes in surrounding bone structure, thereby gradually directing teeth to their proper locations in the oral cavity. Orthodontic therapy can provide many benefits, including ease of maintaining hygiene, improved facial appearance, as well as improved bite function.

Fixed appliances, or "braces," represent one type of orthodontic treatment in which tiny slotted appliances, called brackets, are attached to the teeth. A resilient, U-shaped archwire is then placed into the slots of the brackets. When ligated to the brackets, the archwire acts as a track that guides teeth toward their proper locations during the course of treatment. In the beginning of treatment, the archwire tends to have small cross-sectional dimensions to facilitate ligation and also keep forces imparted to the teeth relatively low as the teeth unravel. In later stages of treatment, the teeth approach their target positions, allowing for progressively larger (and stiffer) wires to be used to improve the practitioner's control over the associated teeth.

In lingual orthodontic treatment, the fixed appliances are bonded to the tongue-facing surfaces of the teeth. This type of treatment is a particular desirable in aesthetic treatment situations where the patient does not wish for the braces to be seen. One example of lingual orthodontic treatment is INCOGNITO brand lingual braces sold by 3M Unitek (Monrovia, CA).

US2006/0073436 discloses a method for virtually designing an archwire.

Summary

While lingual braces offer many aesthetic advantages, it also poses some unique technical challenges. One of the problems recognized in lingual treatment is the substantial variability in arch length, arch shape, and relative tooth sizes from one patient to another. These differences are especially significant when dealing with the lingual surfaces of teeth. Technology advancements in digital scanning methods and rapid prototyping have enabled brackets, archwires, or both, to be fully customized to the teeth configuration of the individual patient.

Yet despite the implementation of custom appliances, many challenges remain. A primary problem derives from archwire shapes being customized based on the desired positions of teeth instead of their maloccluded positions. Since interbracket distance is constrained on the lingual surfaces of the teeth, archwire insertion into the brackets and proper sliding can be difficult. These problems are compounded by the irregularity of lingual archforms, which generally have sharp step bends, for example, between the canine and bicuspid teeth. While decreasing archwire diameter can provide some relief, these bends are still problematic because they are based on the finish positions of teeth and can interfere with bracket slots when placed on maloccluded dentition.

A contributing factor also arises from the robotic shaping of customized wires, which can produce abrupt bends that impede sliding of the archwire through the relatively narrow bracket slots. While is possible to facilitate sliding by lengthening the straight wire segments that connect to the archwire slots of the brackets, this can also be disadvantageous because it reduces the interproximal space available for joining these straight wire segments to each other. Ironically, this can compound the problem by producing even sharper bends in other areas.

Described herein are customized archwires that facilitate wire insertion and sliding in early stages of lingual orthodontic treatment. These archwires have configurations that are harmonized with lingual appliances by modifying a desired archwire shape to predict and reduce interferences between customized archwires and associated brackets, while preserving characteristics of the desired archform to promote efficient orthodontic treatment. The invention is as defined in claims 1, 4, 7.

Although not part of the invention, a method of making a set of orthodontic archwires is provided, the method comprising: determining an archwire shape; generating a plurality of channels provided in one or more fixtures, wherein at least two channels reflect the determined archwire shape and have respective cross-sectional dimensions that are different from each other; constraining an archwire into each channel to cause the archwire to adopt the determined shape; and exposing the one or more fixtures to conditions sufficient to cause the archwires therein to fixedly adopt the determined archwire shape, thereby providing two or more archwires that display varying degrees of fidelity with respect to the determined archwire shape.

In still another aspect not forming part of the invention, an orthodontic kit is provided comprising: a first archwire having a first archwire shape; and a second archwire having second archwire shape, wherein at least a portion of the second archwire shape is a geometrically smoothed representation of at least a portion of the first archwire shape.

In yet another aspect not forming part of the invention, An orthodontic kit comprising: a first archwire having a first archwire shape; and a second archwire having a second archwire shape, each of the first and second archwire shapes having a respective arch length, wherein at least a portion of the second archwire shape is a representation of at least a portion of the first archwire shape that is geometrically expanded or contracted relative to the first archwire shape such that the arch lengths of the first and second archwire shapes are different from each other.

Brief Description of the Drawings

FIG. 1 is a block diagram of an exemplary computer environment in which a client computer communicates with a manufacturing facility;
FIG. 2 is a high-level flowchart directed to an exemplary orthodontic archwire manufacturing method according to one embodiment;
FIG. 3 is a plan view of a dentition along with associated brackets and archwire segments;
FIG. 4 is a plan view showing the archwire segments of FIG. 2 in isolation;
FIG. 5 is a plan view showing an archwire shape based in part on the archwire segments of FIGS. 2 and 3;
FIG. 6 is a view showing the relationship between a straight archwire segment and an archwire slot of fixed dimensions;
FIGS. 7-9 are views showing the relationships between bent archwire segments having varying bend angles and the archwire slot of FIG. 5;
FIG. 10 is a view showing the relationship between a continuously curved archwire segment and the archwire slot of FIGS. 5-8;
FIG. 11 is a plan view showing a smoothed archwire shape superimposed on the dentition of FIG. 2 according to another embodiment;
FIG. 12 is a view showing the relationship between a bent archwire segment and the archwire slot of FIGS. 5-9 according to still another embodiment;
FIG. 13a and 13b are a plan views showing a pair of fixtures directed to yet another embodiment;
FIG. 14a and 14b are a plan views showing a pair of archwires made using the fixtures of FIGS. 13a and 13b, respectively;
FIG. 15 is a plan view showing a smoothed archwire shape superimposed on a maloccluded dentition along with associated appliances; and
FIG. 16 is a plan view of the appliances of FIG. 15 along with archwire segments directed to yet another embodiment.

DEFINITIONS

As used herein:

"Mesial" means in a direction toward the center of a patient's curved dental arch.
"Distal" means in a direction away from the center of the patient's curved dental arch.
"Occlusal" means in a direction toward the outer tips of the patient's teeth.
"Gingival" means in a direction toward the patient's gums or gingiva.
"Facial" means in a direction toward the patient's lips or cheeks.
"Lingual" means in a direction toward the patient's tongue.

Detailed Description

Reference will now be made in detail to embodiments, examples of which are illustrated in the accompanying drawings. The provided embodiments herein are directed to articles, kits, and methods for making customized archwires for orthodontic treatment. In preferred embodiments, the methods described are computer implemented and involve the manipulation and transmission of digital data.

As used herein, the term "digital image" refers to digital data that represents, defines or renders a viewable 3D image, or the image itself. The "dentition" of a patient refers to a set or subset of natural or artificial teeth positioned in three-dimensional (3D) space and associated with the patient at a particular time during treatment. Digital images can be stored, processed, and/or communicated using a back office server or workstation, such as a general purpose computer having a processor capable of manipulating digital images, a user interface, and a display to allow a user to view digital images. The computer further includes memory that is capable of storing multiple sets of digital images and fully accessible to software running on the computer.

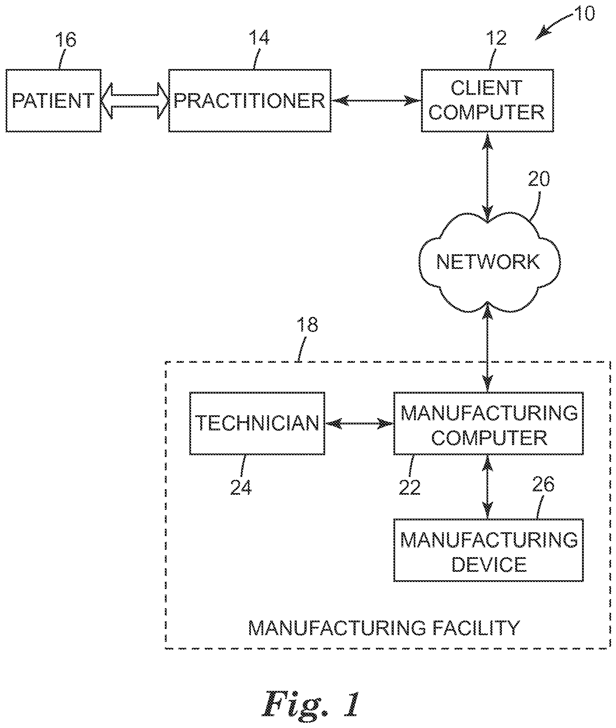

FIG. 1 is a block diagram illustrating an exemplary computer environment 10 that includes a client computer 12. Preferably, the client computer 12 has a processor, input device, memory, and display device. The client computer 12 presents an interface for an orthodontic practitioner 14 to interact with digital images of the dentition of a patient 16. The same interface can also allow the practitioner 14 to review the expected movement of teeth and request one or more customized appliances for the patient 16. As shown, the client computer 12 communicates with a manufacturing computer 22 within a manufacturing facility 18 via network 20. The manufacturing computer 20 in turn provides an environment for a manufacturing technician 22 to review the instructions provided by the practitioner 14 and configure the requested appliances. The manufacturing computer 20 also controls a manufacturing device 22 capable of fabricating the requested appliances.

In some embodiments, the client computer 12 and manufacturing computer 22 are consolidated into a single computer located in a dental laboratory or practitioner's office. The computing resources associated with the client computer 12 or the manufacturing computer 22 may also be distributed over two or more computers in different locations. As another possibility, both the practitioner 14 and technician 22 could interact with the data file on a web-based application, where the data and/or applications are accessed over a network such as the Internet or an intranet. Use of web-based applications can be beneficial in facilitating application updates and support, while providing a high degree of cross-platform compatibility.

Digital image acquisition

Prior to the treatment, the practitioner 14 acquires a digital image representing the dentition of the patient 16 in the maloccluded state. In this step, a digital image of the patient's dental arrangement is provided and stored on a local or remote computing device. The digital image may represent the entire dental structure of the patient 16, just the upper or lower arch, or only a portion of one or both arches. Optionally, the first digital image is provided at the outset of orthodontic treatment, for example immediately prior to or immediately after, the bonding or placement of orthodontic appliances onto the teeth. In some embodiments, the first digital image shows not only the patient's teeth but also the 3D shapes of brackets or other orthodontic appliances associated therewith.

In some embodiments, the digital image is provided using a hand-held intra-oral scanner such as the intra-oral scanner using active wavefront sampling described in PCT Publication No. WO 2007/084727 (Boerjes, et al.). Alternatively, other intra-oral scanners or intra-oral contact probes may be used. As another option, the first digital image may be provided by scanning a negative impression of the patient's teeth. As still another option, the first digital image may be provided by imaging a positive physical model of the patient's teeth or by using a contact probe on a model of the patient's teeth. The model used for scanning may be made, for example, by casting an impression of a patient's dentition from a suitable impression material such as alginate or polyvinylsiloxane (PVS), pouring a casting material (such as orthodontic stone or epoxy resin) into the impression, and allowing the casting material to cure. Any suitable scanning technique may be used for scanning the model, including X-ray radiography, laser scanning, computed tomography (CT), magnetic resonance imaging (MRI), and ultrasound imaging. Other possible scanning methods are described in U.S. Patent Publication No. 2007/0031791 (Cinader et al.).

Optionally, the digital dentition data undergoes additional processing. For example, the raw data may be "cleansed" by removing any data points that represent clear error or are unnecessary. For example, data files representing a tooth surface that include a data point significantly outside the normal expected geometrical relationship of adjacent data points could be fixed by data handling software to remove the erroneous data point. In addition, tooth data points that are missing could be added or estimated by data handling software to create realistic, smoothly curved shapes of teeth or the jawbone, as defined by the data points. In some embodiments, the digital data may be "surfaced", or converted from digital point clouds to 3D surfaces using modeling software from a provider such as Geomagic, Inc. (Research Triangle Park, NC).

Tooth segmentation

In some embodiments, the digital image is then virtually separated into discrete elements so that each tooth may be independently moved as a separate object. Optionally the teeth elements are also separated from the surrounding gingival tissue and bone, leaving only the floating 3D images of tooth crowns. If images of the tooth roots are not available, virtual root stubs can be added to assist the practitioner 14 in visualizing and manipulating the teeth.

Optionally, these processes are performed using digital setup software using the semi-automatic process described in co-pending U.S. Patent Application Serial No. 61/444,664 (See, et al.), filed on February 21, 2011. Such software may be running on the local or remote computing device and performed automatically or with the intervention of an operator. Alternative methods that describe the separation of teeth into individual tooth objects are described in issued U.S. Patent Nos. 6,632,089 (Rubbert et al.), 6,371,761 (Cheang et al.) and 7,245,750 (Cermak et al.).

As an alternative, a physical process may be used to segment teeth. For example, a physical stone model may be sectioned by hand to separate the teeth from each other. The individualized teeth may then be mounted into a malleable material such as wax, allowing the teeth to be set into proper positions by a trained technician. As a further alternative, replica models of the teeth may be mounted in a manipulable dental model system usable for fabricating appliances, such as described in U.S. Patent 6,227,851 (Chishti, et al.), 6,394,801 (Chishti, et al.), and 6,499,997 (Chishti, et al.).

Digital setup model creation

Once discrete movable tooth objects have been created, either in a physical model or software, these objects can be manipulated to provide an orthodontic setup model that reflects the desired teeth positions. If a physical setup model was created by sectioning tooth objects from the stone model and setting them in wax, then a digital analog of the setup model can be rendered using a suitable scanner. Scanners usable for this purpose include, for example, high-resolution optical 3D scanners manufactured by GOM mbH in Braunschweig, GERMANY.

Alternatively, a digital setup model may be constructed entirely in software running on either the client computer 12, the manufacturing computer 22, or a shared computer. For example, the setup model can be prepared on a computer running treatment planning software for virtually moving the teeth from maloccluded positions to desired positions. Creation of the virtual setup model can be automatic or semi-automatic. An exemplary semi-automatic digital setup process is described, for example, in co-pending U.S. Patent Application Serial No. 61/444,664 (See, et al.). Implementing digital setups can provide significant cost savings to the manufacturer compared with using physical models, since the labor associated with cutting and re-positioning physical tooth models is obviated.

After a completed digital setup model has been thus realized, it can be transmitted to the practitioner 14 for approval. Once this approval has been obtained, fabrication of the customized brackets and archwires can begin.

Bracket manufacturing

The digital data collected above can be used to fabricate customized brackets for lingual orthodontic treatment. The configuration of these appliances can be done by a user at an orthodontic clinic, or could be performed at a remotely located manufacturing site. A set of customized appliances for treatment generally includes a set of bonded appliances, or brackets, and a resilient metal archwire. To provide for lower profile appliances, it can advantageous for both the brackets and the archwire to be tailored to the individual patient 16.

Each bracket includes a bonding base (or pad) and a body. Preferably, the bonding base substantially conforms to the outer shape of a respective tooth in the patient's dentition. The shape and size of the bonding base can be determined using a software that accepts input regarding the desired areas of the tooth to which the bracket is bonded. This specification of this area can be manual, where for example a user draws virtual lines on the tooth surface. On the other hand, this specification can also be partially or fully automated, where a software algorithm analyzes the curvature of the tooth surface and determines a surface that is large enough to cover substantial curvature features to allow for reliable manual positioning of the bracket onto the tooth surface. Such an algorithm could also begin with a pre-defined base size.

In some embodiments, the underlying tooth areas are used to define a curved surface representing the interfacial bonding surface between the bracket and the tooth. This surface is then extruded along a direction normal to the tooth surface to produce a three dimensional solid object having a defined base thickness. Preferably, the base is relatively thin (less than 0.3 millimeters) to maintain a low bracket profile.

The body of the bracket, which contains the archwire slot, can be selected from a "library", or a collection of predefined virtual models that can be created and stored in a computer. Alternatively, the bracket body could also be customized to the patient 16. In either case, the practitioner 14 has the option to make modifications to one or more brackets, such as the addition of specialized hooks or tiewings, which can be executed in the virtual environment.

The body and bonding base of the bracket are then virtually merged together to form an integral object using, for example, computer aided design (CAD) software capable of configuring freeform shapes and connecting existing shapes to each other. These objects can be merged in such a way as to minimize the overall profile of the bonded appliance and maximize interbracket distance. As a further advantage, it is possible to make spatial adjustments of the body relative to the bonding base, for example to avoid potential interferences between neighboring or opposing brackets during the course of treatment.

Having joined the body and bonding base into a single virtual object, a physical analog can then be directly manufactured by exporting digital data representing the object to a rapid prototyping device. Such devices include, for example, stereolithography apparatus ("SLA"), laminated object manufacturing, selective laser sintering, fused deposition modeling, solid ground curing, and 3-D printing. Alternatively, the bracket can be made indirectly using a "lost wax" technique, in which a positive replica of the bracket is made in wax, invested in a ceramic material, and then subsequently removed by heat to produce a negative mold. The negative mold can then be used to cast the bracket in gold or other suitable alloy.

Additional options and advantages of the appliance manufacturing process are described, for example, in U.S. Patent No. 6,776,614 (Wiechmann, et al.).

Archwire shape determination

In a preferred embodiment, the brackets and the archwire are both customized in a manner that cooperatively expresses the orthodontic prescription governing the desired teeth positions. Any given element of the orthodontic prescription, including the in-out, vertical height, rotation, angulation and torque associated with each tooth, can be built into the bracket, archwire, or both in combination. If feasible, it can be advantageous to configure these appliances such that the archwire substantially lies within a plane. This principle is applied, for example, in the INCOGNITO brand Appliance System, manufactured by 3M Unitek in Monrovia, CA.

Optionally, one or more of the brackets have archwire slots which are oriented in approximate parallel alignment relative to its respective bracket bonding base. In this configuration, when the set of brackets are installed on the dentition of the patient 16 and the archwire is inserted in the slots, the archwire is canted relative to an occlusal plane to conform to the surface of the teeth at the location where the archwire is inserted into the slots. This in turn can allow the overall thickness of the brackets may be decreased. Specifics on the development and manufacturing of a canted orthodontic archwire are described in, for example, U.S. Patent Nos. 6,776,614 (Paehl, et al.) and 6,928,733 (Rubbert, et al.).

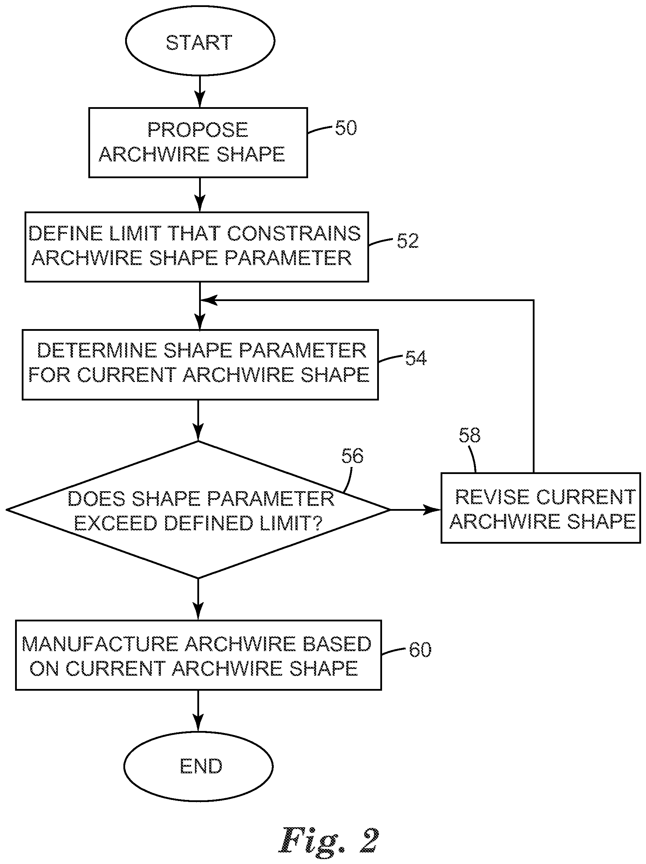

FIG. 2 is a flowchart showing manufacturing steps used in making a customized archwire. Optionally, some or all of these steps are executed on the manufacturing computer 22 under the supervision of a technician 24. As provided, these steps include proposing an archwire shape (block 50), defining a limit associated with an archwire interference parameter (block 52), determining the interference parameter for the current archwire shape (block 54), and then inquiring if the interference parameter exceeds the defined limit (block 56). If so, then the archwire shape is revised (block 58) and once again compared against the defined limit (block 56) iteratively until the condition is met. Finally, once the condition is met, a physical archwire is manufactured in accordance with the archwire shape (block 60). Each of these steps will be further explicated in the paragraphs that follow.

Initially, an archwire shape is provided that is associated with specified positions of the patient's teeth. In an exemplary embodiment, and as indicated in block 50 of FIG. 2, the teeth positions are specified by practitioner 14 and/or technician 18, and represent desired positions of the patient's teeth. The desired teeth positions could be, for example, final teeth positions approved by the practitioner, and an archwire shape proposed, using the digital setup model described above. Alternatively, the desired teeth positions could be based on teeth in intermediate positions that could be reached at some point prior to the end of treatment. Preferably, the archwire shape includes not only the shape of the arch as defined by the longitudinal axis of the archwire, but also the cross-sectional dimensions of the wire. The archwire shape further includes the orientation of the wire about its longitudinal axis, which may vary along the arch.

With the teeth fixed in their desired positions, virtual brackets can be attached to their respective tooth objects according to their proper, predetermined locations. The computer can then determine the precise location and orientation of each of the archwire slots associated with the virtual brackets in a unified 3D coordinate system.

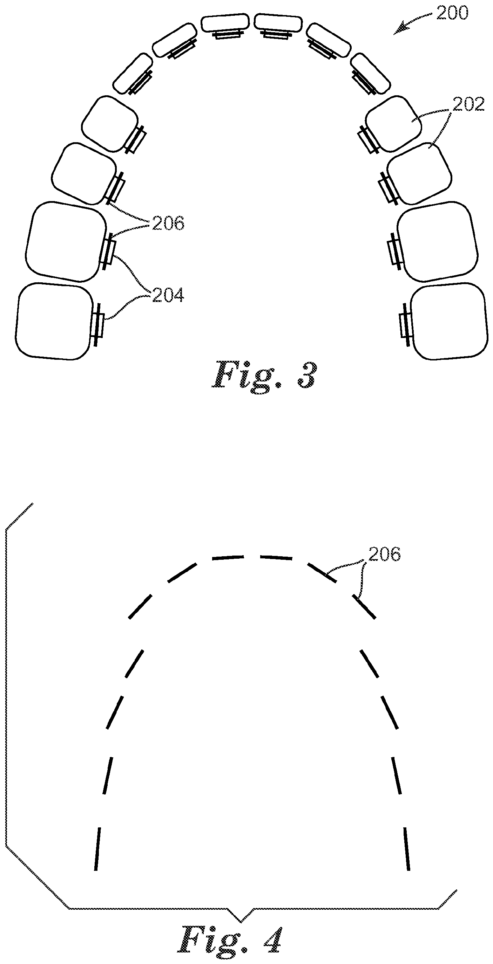

FIG. 3 shows a virtual digital setup model 200, which represents the desired teeth positions of the patient 16 undergoing orthodontic treatment. The setup model 200 shows, in plan view, virtual teeth 202 and brackets 204 (generically represented here as rectangles) attached to the lingual surfaces of the teeth 202. In an exemplary embodiment, the archwire slot of each bracket 204 in the set determines the location and orientation of a finite wire segment 206. Each segment 206 has a defined length that can be adjusted in software. Preferably, however, the segment length is at least the longitudinal length of the archwire slot of each bracket 204 to facilitate archwire sliding. In this example, all of the archwire slots (and associated wire segments 206) are aligned within a plane, although this need not be the case generally.

In the illustrated embodiment, the segments 206 exceed the lengths of their respective archwire slots on the mesial and distal sides by respective margins $\delta_m$ and $\delta_d$. The margins $\delta_m$ and $\delta_d$ need not be equal to each other, and can be adjusted separately in a user interface within the digital setup software and can differ from one segment 206 to another. In some instances, it can be desirable to increase $\delta_m$ and $\delta_d$ when there significant interproximal space is available between brackets and decrease $\delta_m$ and $\delta_d$ when interproximal space is limited. In some embodiments, the margins are assigned default values and a practitioner 14 provides instructions to adjust $\delta_m$ and $\delta_d$ for some or all of the segments 206 in the setup model 200.

The digital setup software can also enable either the practitioner 14 or technician 24 to make further manual adjustments to the archwire definition. For example, each archwire segment 206 can be individually adjusted for one or more of the following: lingual or occlusal step bends, torque, angulation, rotation, and in-out (i.e. lingual-facial) offsets. The digital setup software optionally includes one or more default adjustments to the archwire shape based on treatment norms, which can be superseded by input from the practitioner 14 or technician 24. For example, the segments 206 for some or all of the anterior teeth may automatically include a slight occlusal offset to expand interbracket distance.

FIG. 4 shows the discontinuous archwire segments 206 with the brackets 204 and teeth 202 removed. Each segment 206 has a precise length, location and orientation in Cartesian coordinate space. The coordinate system used for the segments 206 is common to coordinate system used for the teeth 202 and brackets 204 and is optionally defined relative to one or more pre-defined landmarks based on reference planes associated with the patient's dentition or a fixed location in the oral cavity, such as a fixed location on the patient's jawbone.

While the segments 206 are illustrated here as plain line segments for simplicity, it is to be understood that each segment 206 has a specific spatial orientation that includes both angulation and torque. For a rectangular archwire, each segment 206 could have some degree of twist about its longitudinal axis which is not apparent in FIGS. 3 and 4. Canted archwires, for example, contain one or more twists along the length of the arch to closely conform with the lingual surfaces of the teeth 202. As a further example, the segments could also have some degree of angulation whereby the segments 206 extend at an angle relative to the occlusal plane (i.e. the plane of the page in FIG. 4).

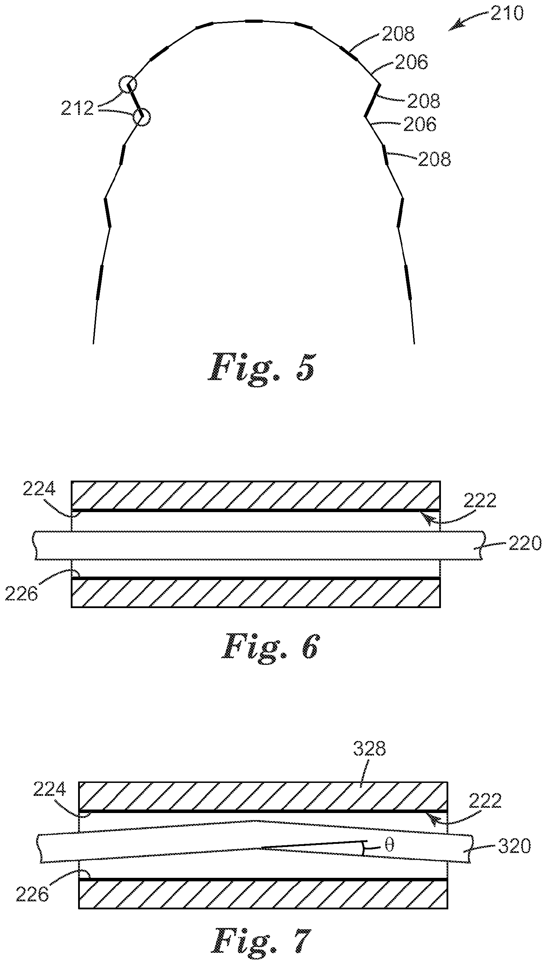

Referring now to FIG. 5, the segments 206 are then connected to one other by adding interproximal (or connecting) wire segments 208 to provide a completed virtual archwire 210. In the example shown, a single interproximal segment 208 connects each pair of neighboring segments 206. However, this need not be the case. For example, each pair of neighboring segments 206 may be connected to each other by two or more interproximal segments 208 joined end to end. In cases where torque values vary amongst the segments 206, the interproximal segments 208 preferably adopt orientations that provide continuity for the resulting twists along the length of the archwire 210.

As shown in FIG. 5, the segments 206, 208 that make up the archwire 210 come together at different angles based on the relative orientations of the appliances in the orthodontic setup model. Since the segments 206, 208 are straight in this case, the junctions between adjacent segments 206, 208 are manifested as bends 212. The characteristics of these bends 212 are examined in further detail below.

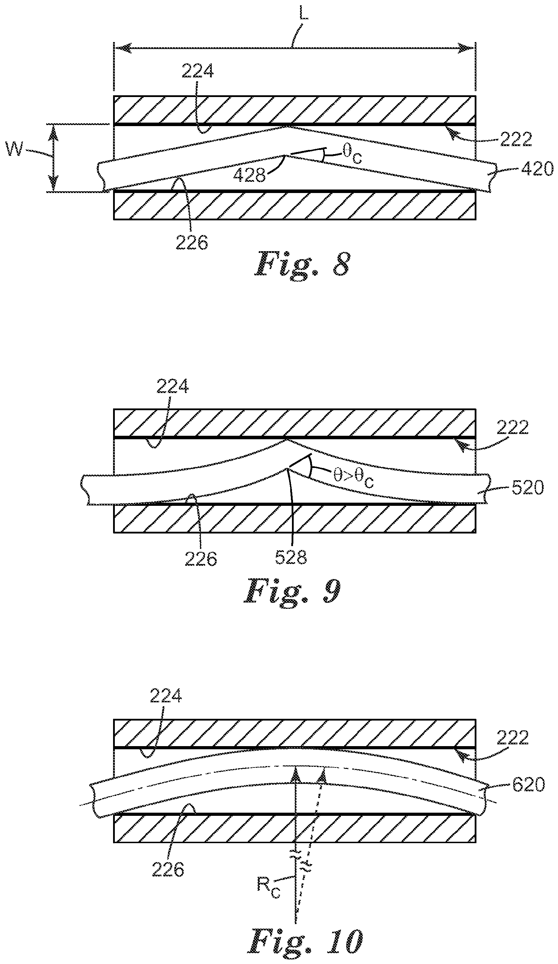

For purpose of this illustration, it is assumed that the archwire is constrained to reside within the plane of the page with respect to FIGS. 6-10 and 12. FIG. 5 shows a straight archwire segment 220 residing in an archwire slot 222 with fixed first and second sidewalls 224, 226. FIGS. 7 and 8 show archwire segments 320, 420 containing slight bends 328, 428 and residing within the same archwire slot 222. The bends 328, 428 are characterized by a bend angle $\theta$, or the angular deviation of the portion of the segment 320, 420 on one side of the bend 328, 428 from the trajectory of the portion of the segment 320, 420 on the opposite side of the bend 328, 428.

As shown in this figures, the bend angle $\theta$ can significantly affect the resistance to sliding encountered by the segment 220 as it passes through the slot 222. When $\theta$ is zero, there would be, in theory, essentially no resistance to sliding as shown in FIG. 6. If $\theta$ is increased only slightly, as shown in FIG. 7, there is still no contact between the segment 320 and the slot 222. Thus, it is still possible for the segment archwire 320 to slide to some extent through a slot of fixed dimensions, provided that some re-posturing of the archwire 320 is permitted. However, FIG. 8 shows that once $\theta$ is increased to a certain threshold $\theta_s$, contact between the segment 420 and the first and second sidewalls 224, 226 of the slot 222 can no longer be avoided. In the geometric model shown here, where the archwire has a diameter D and the slot 222 has a length L and a transverse width W, the threshold bend angle can be approximated as:

$$\theta_s = 2 \tan (2(W\text{-}D)/L)$$

Accordingly, the value of $\theta_s$ will decrease as the archwire diameter increases, and will approach zero as the diameter D of the segment 420 approaches the width W of the slot 222.

FIG. 9 shows the interaction between a segment 520 with a bend 528 having a $\theta$ that exceeds $\theta_s$. In this configuration, the bend 528 is sufficiently sharp that the segment 520 interferes with the second sidewall 226 at the mesial and distal ends of the slot 222. To accommodate the bend 528, the archwire segment can change shape-for example, by flexing open as shown in FIG. 9. However, forcing the segment 528 to deflect within the slot presents a number of disadvantages. For example, deflection of the segment 520 can result in binding and increased resistance to sliding. Such resistance can impede tooth movement, especially during the leveling and aligning stages of treatment. Depending on the stiffness of the segment 520, initial engagement of the segment 520 into the slot 222 can also be complicated by the bend 528, presenting an ease of use problem for practitioners. This is especially problematic in early stages of treatment when teeth misalignment is greatest and bracket slots often do not coincide with straight wire segments in the archwire.

These problems are not limited to archwires composed of straight wire segments. FIG. 10 illustrates that similar interferences occur even when a bend is not concentrated at one point but spread across a continuous curve along an archwire segment 620. As shown, the segment 620 begins to interfere with the sidewalls 224, 226 when its radius of curvature is decreased below $R_c$. Applying the Pythagoran theorem, the threshold radius can thus be approximated as:

$$R_c = [(W^2 - D^2 + L^2/4)/(W-D) - D] / 2$$

Since the curvature $\kappa$ is simply the reciprocal of the radius of curvature, it can be approximated that binding of the segment 620 will occur when the curvature of the archwire segment shown exceeds a critical curvature $\kappa_c$, or $1/R_c$. Based on this geometric relationship, as the diameter of the wire D approaches the slot width W, $R_c$ approaches infinity and $\kappa_c$ approaches zero.

Arch length discrepancy is further consideration that that impacts both archwire engagement and sliding. This discrepancy is measured as the difference between the arch length of the setup model and the arch length of the maloccluded dentition model. Depending on the malocclusion, this arch length discrepancy can either be in the form of a deficiency or an excess of arch length. In lingual orthodontics, it can be especially difficult to place an archwire configured based on final teeth positions into a crowded dentition, since the length of the archwire between adjacent brackets decreases significantly as the teeth are aligned. Unlike labial archwires, lingual archwires also tend to have significant step bends located between the cuspid and bicuspid teeth, which can amplify these effects.

In general, problems with archwire engagement and sliding can give rise to significant issues in lingual orthodontic treatment. For example, archwire insertion difficulties can not only be uncomfortable for the patient 16 but can also extend chair time during wire changes. If the wire cannot be inserted at all, the practitioner 14 may be compelled to "jockey" the archwire so that the problematic bend alternates between the mesial and the distal sides of the archwire slot during the course of treatment. However, this practice is non-ideal because it tends to skew the archform and result in inefficient treatment. In any case, interferences between the archwire and brackets can impose stress on the wire material, increasing the risk of archwire breakage during the course of treatment.

Archwire shape revisioning

As previously illustrated, interferences resulting from archwire bends can be problematic in treatment. This problem can be remedied by virtually revising the proposed archwire shape prior to archwire manufacture. To assist in this endeavor, one or more interference parameters can be used to predict interferences before they occur. A suitable interference parameter can be based on any other metric or metrics that describe the geometric relationship between an archwire segment and a partially surrounding archwire slot of fixed dimensions.

In some embodiments, the interference parameter is based on a bend angle $\theta$ of one or more bends along the archwire. The interference parameter could also be based on a curvature $\kappa$ or radius of curvature R measured along at least a portion of the archwire. While the metrics represented by $\theta$, $\kappa$, and R are explicitly mentioned here, these are exemplary only and other geometric parameters correlated with the interference between the archwire and archwire slot could also be used.

Referring back to block 52 of FIG. 2, an interference parameter limit can be defined based on the known dimensions (e.g. length, width, and height) of the bracket archwire slots. The limiting value of the interference parameter can be determined such that desired adequate archwire sliding and insertion into brackets can be maintained as long as the interference parameter of the archwire shape does not exceed its limiting (or threshold) value. Notably, the limit can be an upper limit, such as a maximum bend angle ($\theta_c$) or maximum curvature ($\kappa_c$), or a lower limit, such as a minimum radius of curvature (R), as described above. Individually, an upper or lower limit gives rise to an open range of values, while an upper and lower limit in combination gives rise to a closed range of values. As an option, the limit to the interference parameter could also incorporate a "margin of safety" to prevent the manufactured archwire from even approaching a condition resulting in the above interferences.

As shown in block 54 of FIG. 2, the interference parameter of the proposed archwire, or archwire segment, is then determined. Proceeding to block 56 of FIG. 2, the interference parameter is then compared with the upper (or lower) limit defined earlier in block 52. If so, the process moves to block 58, at which the archwire shape can then be modified such that the interference parameter no longer extends outside of its permissible range. Such a modification can ease archwire insertion and allow the bend to slide more easily along the archwire slot as the teeth move toward desired positions. It is further recognized that, for relatively minor corrections, the archwire shape should conform as closely as possible to the ideal archwire shape. Retaining fidelity of the original proposed archwire shape can be beneficial in allowing the teeth to be moved as closely as possible to their intended locations as previously defined by the setup model.

In one embodiment, the archwire shape is modified by smoothing at least a portion of the archwire shape. This can be accomplished, for example, using a mathematical curve-fitting algorithm that fits a smooth curve to a comparatively jagged wire configuration. Such smoothing operations include use of a smoothing spline (i.e. a piece-wise polynomial function), polynomial regression, or curve-fitting. The degree of smoothing can be conveniently adjusted using, for example, the smoothing parameter $\lambda$ in a smoothing spline function, controlling the trade-off between fidelity to the proposed archwire shape and the jaggedness of the archwire shape. Preferably, the degree of smoothing is selected such that a critical bend angle or curvature of the modified archwire shape does not unduly deviate from the proposed archwire shape.

In an alternative embodiment, a modified archwire shape is provided by replacing at least a portion of the proposed archwire shape with at least a portion of an archwire shape selected from an existing library of archwire shapes. This substitution could provide a modified archwire shape that satisfies the interference parameter requirements. The selection process may include, for example, defining a certain tolerance and then comparing a portion of the proposed archwire shape to archwire shapes stored in a virtual library. The process terminates, for example, when an archwire shape is found that matches the proposed archwire shape (or portion thereof) within the certain tolerance. If the tolerance yields too many matches, it can be iteratively reduced until a match is found. On the other hand, if no matches are found, the tolerance may be progressively increased until a match is found.

As a variation of the above embodiment, the modified archwire shape may be provided by morphing the proposed archwire shape with an archwire shape selected from an existing library of archwire shapes. By analogy, one or more portions of a proposed archwire shape may be modified by morphing (or averaging) portions of the proposed archwire shape with respective portions selected from a library thereof. As an advantage, this method allows the modified archwire shape, or portion thereof, to conform more closely to the desired configuration derived from the setup model approved by the practitioner. Optionally, the morphing of the two archwire shapes can be executed on a sliding scale to provide for a range of possible intermediate configurations that have varying degrees of fidelity with respect to the proposed archwire shape.

As shown in FIG. 2, the above could be executed using an iterative process. In one embodiment, at least a portion of an archwire shape could be provided having an interference parameter that extends outside the permissible range. The archwire shape portion could then be iteratively smoothed until the interference parameter for at least a portion of the archwire shape no longer extends outside the permissible range to obtain a replacement archwire shape segment. Finally, a portion of the original archwire shape can then be replaced with a corresponding portion of the replacement archwire shape segment.

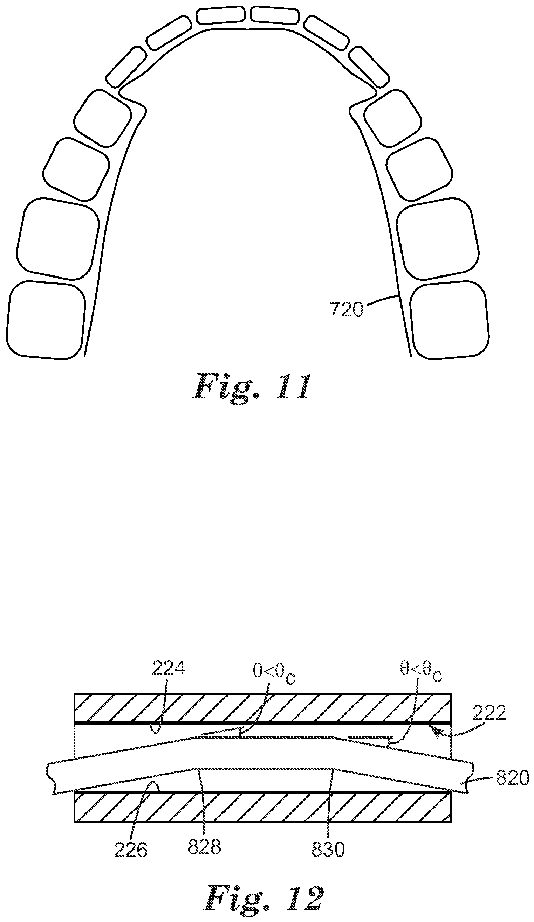

In some embodiments, the smoothing of the archwire shape may be executed along the entire length of the archwire shape. For example, FIG. 11 shows the shape of a virtual archwire 720 superimposed on the patient's dentition. As shown, the shape of the archwire 720 has been mathematically smoothed along its entire archform to eliminate discrete bends. By eliminating abrupt bends along the archwire, sliding and insertion of the archwire 720 in respective brackets can be significantly enhanced, while preserving the overall customized configuration of the original, unsmoothed archwire.

In another variation, the smoothing of the archwire shape may be executed locally, or over a limited portion of the archwire shape. For example, FIG. 12 shows the outcome of a primitive smoothing operation manifested on archwire segment 820, where one sharp bend has been replaced by two relatively gentler bends 828, 830 that are spaced apart from each other. As indicated, each of the gentler bends 828, 830 has a bend angle less than the critical bend angle $\theta_c$. This modification can provide enhanced archwire insertion and sliding in the archwire slot 222 while preserving the same overall shape as the original unsmoothed archwire segment shown in FIG. 9.

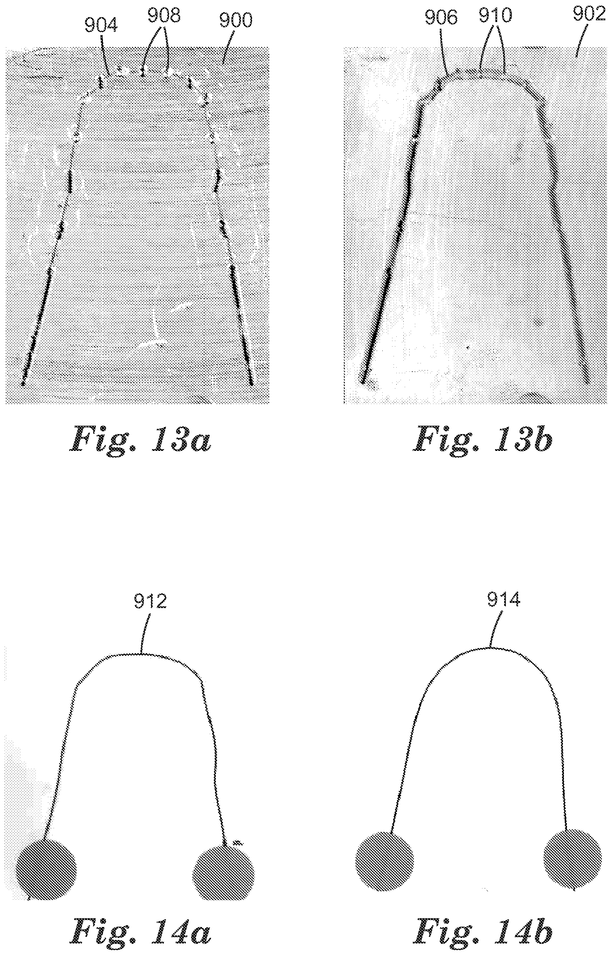

In yet another embodiment, a smoothing operation can be incorporated into the archwire manufacturing process itself, effectively consolidating the steps represented by blocks 58 and 60 in FIG. 2 into a single step. FIGS. 13a and 13b show respective plate fixtures 900, 902, each providing a respective channel 904, 906 for the manufacture of an archwire composed of a shape memory alloy such as nickel titanium or its derivative alloys. As shown, each channel 904, 906 includes a plurality of generally linear channel segments connected in an end-to-end arrangement. The channel width for each linear segment is generally uniform along its length and is somewhat larger than the corresponding lateral width of the archwire.

Optionally and as shown, each channel 904, 906 includes a plurality of cylindrical cavities 908, 910, corresponding to locations where neighboring channel segments come together. The cavities 908, 910 can assist in physically engaging and disengaging archwires to and from the channels 904, 906. The channels 904, 906 can be engraved using a numerically controlled milling machine that accepts as input a digital data representing the desired archwire shape, which can in turn be directly provided from the setup model. Here, the longitudinal axis of the desired archwire shape, when superimposed on either fixture 900, 902, generally bisects each segment of its respective channel 904, 906. Additional options and advantages generally associated with this method are described in U.S. Patent 6,928,733 (Rubbert, et al.).

The application of the fixtures 900, 902 takes advantage of the natural resilience of the archwire material to provide different degrees of smoothness. Referring again to FIGS. 13a and 13b, the channels 904, 906 have configurations directed to the same desired archwire shape. However, the channel 906 has a larger cross-sectional dimension (here, a lateral width) than the channel 904. To shape set an archwire, a wire composed of a suitable shape memory alloy is inserted into the each of the channels 904, 906. As each wire is constraining in its respective channel 904, 906, it naturally relaxes to adopt a configuration that minimizes sharp bends along its length. Each fixture 900,902 is then exposed to conditions sufficient to cause the archwire contained therein to fixedly adopt the desired shape. For nickel-titanium wires, this is generally achieved by heating the fixture to a temperature in excess of 350 degrees Celsius.

FIGS. 14a and 14b show finished archwires 912, 914 manufactured according to the above method using the fixtures 900, 902 in FIGS. 13a and 13b. As shown, the archwire 912 has substantially smoother contours than the archwire 914 as a result of being shape set in a channel 906 having a wider cross-sectional dimension. A further advantage of this method derives from its simplicity. If desired, the smoothness of the resulting archwire shape can be tailored over a wide range simply by adjusting the width of the channels 904, 906, while avoiding significant changes to the overall archwire shape.

In this embodiment, exposing the fixtures 900, 902 to conditions sufficient to cause the archwires therein to fixedly adopt the desired shape provides two or more archwires that display varying degrees of fidelity with respect to the desired shape. This in turn can be used to provide an archwire sequence in which the shape of each successive archwire progressively approaches the desired archwire shape defined in the orthodontic setup model.

Using these methods, the archwire shape can be tailored to display different degrees of smoothness at different locations along the arch. This can be achieved, for example, by implementing fixtures with channels that have non-uniform cross-sectional dimensions (e.g. having tapered walls). Such an archwire configuration may be advantageous in situations where one portion of the patient's dentition nearly conforms to that of the setup model while another portion of the dental arch deviates significantly from that of the setup model. In these cases, it can be beneficial to smooth some segments of the archwire to a greater degree than others. Changes in smoothness can either be gradual or abrupt, depending on the needs of the practitioner. As the cross-sectional dimensions of the channel 904, 906 are limited only by capabilities in manufacturing the fixtures, a wide latitude for customization is possible.

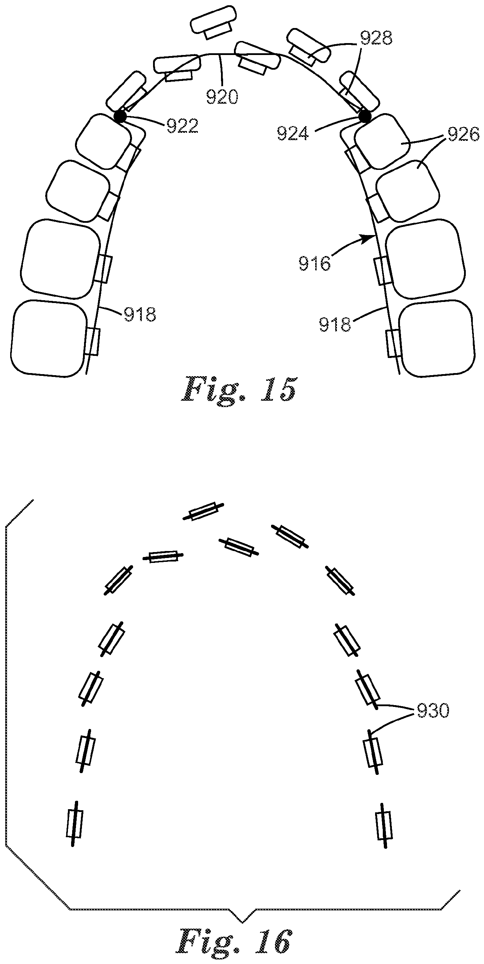

Archwire length discrepancy is another difficulty that can be alleviated by revising the proposed archwire shape. This phenomenon is shown in FIG. 15, which shows an exemplary archwire shape 916 superimposed on the patient's maloccluded dentition. The archwire shape 916 is subdivided into two posterior sections 918 and anterior section 920 by adjustable nodes 922, 924. The archwire shape 916 is shown superimposed on the maloccluded dentition of the patient 16, which has significant crowding in the anterior region. Looking to the portion of the archwire shape 916 between nodes 922, 924, it is visually apparent that there is insufficient wire length to engage the anterior segment 920 to brackets on the anterior teeth. It is further observed that further smoothing the archwire does not resolve this problem, because this conflict is not created by interferences with individual archwire slots but rather a mismatch of the archwire shape as a whole.

The nodes 922, 924 can be freely defined and adjusted in software by either the practitioner 14 or technician 22 to re-define the sections 918, 920 if desired. For example, a single node could be used to divide the archwire shape into two discrete archwire sections, while three or more nodes could be used to create four or more discrete archwire sections. In any case, the nodes 922,924 enable different sections of the archwire shape to be isolated and revised independently from each other.

In an exemplary embodiment, the interference parameter is based on an arch length discrepancy. The arch length of a given archwire shape can then be adjusted as appropriate to reduce the arch length discrepancy. Where there is a deficiency in arch length, for example, the mismatch can be relieved by increasing the length of the archwire to reduce the arch length discrepancy until the interference parameter condition is satisfied. In FIG. 15, only the anterior section 920 is associated with crowding, while the posterior sections 918 are associated with properly aligned dentition. This situation can be addressed by expanding the anterior section 920 to extend its length, while preserving the location and/or orientation of the posterior sections 918. By expanding archwire length over just a portion of the archwire shape 916, any adverse impact on the posterior dentition can be substantially eliminated or reduced. More generally, the nodes 922,924 allow the arch length of a given section 918, 920 to be adjusted to a greater or lesser degree than the arch length of another given section 918, 920.

In the example provided by FIG. 15, the nodes 922, 924 providing the endpoints of the anterior section 920 may or may not be constrained. In some embodiments, the nodes 922, 924 are pinned such that the anterior section 920 expands asymmetrically in the anterior direction (toward the maloccluded dentition) while the posterior sections 918 remain fixed in their original locations. Accordingly, the orientation and location of posterior sections 918 can remain fixed as the arch length of the archwire shape 916 is adjusted. As another option, some deviation of the nodes 922, 924 can be allowed whereby the anterior section 920 is allowed to expand outwardly in all directions. This type of expansion occurs, for example, when isometrically scaling the section 920. However, this may not be desired since it could cause the locations of the posterior sections 918 to deviate significantly from those in the originally proposed archwire shape.

The expansion of the anterior section 920 may occur uniformly or non-uniformly along the length of the anterior section 920. Uniform expansion along the arch occurs, for example, when isometrically scaling the anterior section 920. By contrast, non-uniform expansion occurs when if a first portion of the anterior segment is expanded to a proportionately greater or lesser extent than a second portion of the anterior segment. For example, the anterior section 920 itself can be subdivided into two or more subsections, each having a respective expansion index defining the extent of arch length adjustment. In some embodiments, the expansion index is automatically or semi-automatically determined in software. Optionally, the expansion index for one or more sections could be based on the degree of crowding in the patient's dentition associated each section or subsection.

In some embodiments, the wire sections to be expanded are based on the definitions of one or more of the predetermined archwire segments 206, 208 from the digital setup model, as previously described in the context of FIG. 5. If the wire section to be expanded is directed to an archwire segment, for example, the expansion index associated therewith can optionally be at least partially based on the bend angle formed between the wire segment and one or both of its neighboring wire segments along the archwire shape. It is further contemplated that the expansion index could be at least partially based on any other measurable interference parameter, such as curvature, that relates to the degree of crowding in the maloccluded dentition proximate the associated archwire section.

These methods need not be limited to archwire expansion. While expansion of the anterior segment is described above, an opposite scenario may also occur in which there are significant gaps between adjacent teeth. In this situation, contraction of one or more archwire segments is contemplated to compensate for excess archwire length present during one or more early stages of treatment.

Optionally, the size of each step in the series has a configuration providing a controlled activation with respect to its previous iteration. Since the wire lies in the plane, each segment of the archform can be described in four degrees of freedom.

As before, the above methods can be performed iteratively. For example, at least a portion of an archwire shape having an interference parameter that extends outside the permissible range could be provided. Then, the arch length of a portion of the archwire shape could be iteratively adjusted until the interference parameter for the portion of the archwire shape no longer extends outside the permissible range to obtain a replacement archwire shape segment. Finally, a corresponding portion of the original archwire shape can then be replaced with the replacement archwire shape segment.

In some embodiments, revisions to the proposed archwire shape are at least partly based on the maloccluded dentition model. For example, the revision could involve determining the initial locations and orientations of one or more archwire segments when the archwire is placed on the patient's maloccluded dentition model. This could be compared with the locations and orientations of respective segments when the archwire is placed on the setup model, in which the teeth are in desired (or final) positions. By defining a mathematical function that transforms the location and orientation of the archwire segments between initial and final positions in a 3D coordinate system, the computer can replace the proposed archwire shape with an intermediate archwire shape that substantially alleviates archwire length discrepancy.

In one embodiment, the positions (location and orientation) of the archwire segments in the proposed archwire shape are first determined on the maloccluded dentition, the positions of the same segments are then determined on the desired dentition, and then at least a portion of the proposed archwire shape is replaced with at least a portion of a morphed archwire shape defined by the positions of the segments associated with the maloccluded and desired dentition. This is shown with reference to FIG. 16.

FIG. 16 shows straight wire segments 930 associated with the brackets 928 on the maloccluded dentition shown in FIG. 15. In this case, all of the segments 930 are constrained to lie within the same plane, each location and orientation of each segment can be fully specified in only 4 degrees of freedom. Each segment additionally has an individual length that can vary from one segment to another. Therefore, assuming that the wire cross-sectional dimensions are fixed, it follows that the specification S of a wire segment could be generically defined as:

$$S = f(x, y, \alpha, \beta, L)$$

, where x and *y* are Cartesian coordinates within the *x*-*y* plane, $\alpha$ defines angular orientation in the plane, $\beta$ defines torque angle about the longitudinal axis of the wire segments, and L is the length of the wire segment.

Suppose then $S_1 = f(x_1, y_1, \alpha_1, \beta_1, L_1)$ and $S_2 = (x_2, y_2, \alpha_2, \beta_2, L_2)$ represent the specifications for the initial and final configurations of a given wire segment. In this case, an intermediate wire segment specification S; could be trivially defined as:

$$S_i = f((x_2\text{-}x_1)/2, (y_2\text{-}y_1)/2, (\alpha_2\text{-}\alpha_1)/2, (\beta_2\text{-}\beta_1)/2, (L_2\text{-}L_1)/2)$$

The specification S; thus provides, in a sense, a geometric "average" of the initial and final wire segments. By reiterating this process for each pair of corresponding wire segments comprising the initial and final archwire shapes, the revised archwire shape can be fully specified which averages characteristics of $S_1$ and $S_2$.

As indicated by block 56 in FIG. 2, an arch length discrepancy for the revised archwire shape can be then calculated and compared with a pre-defined limit specified by either the practitioner 14 or the manufacturer. If the arch length discrepancy falls within the defined limit, then the revised archwire shape is then accepted. If the test fails, then additional intermediate archwire shapes can be derived (FIG. 2, block 58) and tested until a suitable archwire shape has been found. A further intermediate archwire shape can be derived, for example, by morphing $S_1$ and S;. Alternatively,

a weighted average between $S_1$ and $S_2$ could be used. By repeating this process, the archwire shape is continually revised, progressively approaching the maloccluded condition until the arch length discrepancy condition is satisfied.

In some embodiments, a plurality of intermediate archwire shapes are determined at the outset by linearly interpolating between the initial and final archwire shapes, as described above, to provide a staged treatment plan. For example, this could be carried out by linearly interpolating the location and orientation of paired archwire segments associated with the maloccluded and desired teeth positions, respectively, to obtain a defined portion of an intermediate archwire shape. This treatment plan could include a sequence of archwires that engage customized brackets bonded to the teeth to progressively move the teeth from initial to final positions.

Optionally, a deviation index is measured that reflects the geometric deviation from one archwire shape to the next. If desired, replacing a first archwire shape with a second archwire shape could be contingent on the deviation index between the first and second archwire shapes falling within a predetermined range. In some embodiments, the first and second archwire shapes are consecutive archwire shapes in the archwire sequence. The range could be defined such that each successive archwire provides no more than a certain degree of activation (corresponding to a maximum level of force applied to the patient's teeth per unit area) when an archwire is replaced during the course of treatment. For simple tooth movements, a staged treatment plan can minimize problems associated with archwire sliding, because the archwire shape adapts to the predicted movement of teeth.

Finally, once the revised archwire shape satisfies the defined interference parameter limit, the process proceeds to block 60 in FIG. 2, where one or more customized archwires are manufactured based on the revised archwire shape. The customized archwires can be manufactured using any of a number of methods known in the art. Suitable archwire materials include stainless steel, titanium, and shape memory alloys, including alloys of nickel-titanium and copper-nickel-titanium.

In some embodiments, the archwires are composed of a metal alloy that is relatively soft and heat treatable. One such alloy is an ELGILOY brand cobalt chromium alloy provided by Rocky Mountain Orthodontics (Denver, CO). This particular wire material has a composition of 40% cobalt, 20% chromium, 15% nickel, 7% molybdenum, 2% manganese, 0.15% carbon, with the balance in iron. Another suitable alloy is AZURLOY brand alloy provided by Ormco Corporation (Orange, CA). Archwires made from these alloys are particularly suitable for use with a six-axis bending robot with heated grippers. The wire bending robot can convert a straight length of wire into a customized archwire using the digital data representing the revised archwire shape. Further details concerning the use of a six-axis wire bending robot are described in International Patent Publication No. WO 01/80761 (Rubbert, et al.).

The archwires may be heat treated after bending to increase the strength of the wire. For example, the heated grippers of the bending robot can apply an electric current to resistively heat the wire. As another option, the heat treatment can be performed on the entire archwire by placing the archwire in an oven or other heating apparatus as described in U.S. Patent No. 6,214,285 (Rubbert, et al.). If a cobalt chromium archwire is used, the heat treatment can be performed at a temperature of approximately 260 degree Celsius.

In another aspect, the archwire can be bent and heat treated by supplying the archwire to a wire bending robot, bending the archwire with the wire bending robot to have the revised archwire shape, and heat treating the archwire while the wire is held in place by the wire bending robot. While cobalt chromium alloy wires are contemplated, other alloys that benefit from heat treatment after bending could also be used. Here, the steps of bending and heat treating could be performed by inducing a series of bends in the wire and heating the wire after inducing each of the bends in the series of bends.

Additionally, as previously described in the context of FIGS. 13a-b and 14a-b, the archwire can be formed into the desired shape by generating a configuration of one or more fixtures based on digital data representing the revised archwire shape, manufacturing the one or more fixtures based on the configuration, constraining a wire in the one or more fixtures and exposing the fixture to conditions sufficient to cause the archwire therein to permanently adopt the revised shape. Optionally, the fixtures are manufactured using a numerically controlled manufacturing device that accepts as input digital data representing one or more archwire shapes. A suitable manufacturing device could be, for example, an computer-controlled high speed milling machine capable of precisely milling channels into a generally planar fixture.

Kits and assemblies

Archwires manufactured according to the provided methods can be packaged individually or as a part of a kit containing a two or more archwires. A kit containing a set of archwires could be provided to the orthodontic practitioner to enable, for example, a staged treatment in which two or more archwires are provided for use in sequence to progressively move teeth toward desired positions.

An exemplary orthodontic kit contains a first archwire having a first archwire shape and a second archwire having second archwire shape, in which a portion of the second archwire shape is a geometrically smoothed representation of at least a portion of the first archwire shape. Optionally, the smoothed representation has an interference parameter less than the interference parameter of corresponding portions of the first archwire shape. As defined previously, the interference parameter could be based on average bend angle, maximum bend angle, average curvature, maximum curvature, arch length discrepancy, and combinations thereof.

Another exemplary orthodontic kit includes a first archwire having a first archwire shape, and a second archwire having a second archwire shape, where each of the first and second archwire shapes are characterized by a respective arch length. At least a portion of the second archwire shape is a representation of at least a portion of the first archwire shape that is geometrically expanded or contracted relative to the first archwire shape such that the arch lengths of the first and second archwire shapes are different from each other.

Optionally, the archwires are sufficient to move teeth from the maloccluded positions to desired positions in an orthodontic treatment. For example, the set might include an initial archwire having the modified archwire shape referred to in block 60 of FIG. 2 and a finishing archwire having the proposed archwire shape referred to in block 50 of FIG. 2. The set of archwires may also have different cross-sectional shapes (e.g. round, rectangular) and dimensions (e.g. 014, 016, 16x22, 17x25) depending the intended stage of treatment.

In some embodiments, the archwires have respective shapes that provide for a predefined degree of activation when placed on a patient's teeth. The degree of activation could be measured as a function of the deviation index between a given archwire and the following archwire in the sequence. Desired ranges for deviation index could be calculated based on the optimal range of forces that the archwire should apply to the teeth, and could depend on the inherent stiffness of the wire material, cross-sectional dimensions of the wire, length of the interproximal segments, and the type of tooth movement intended.

Various packaging configurations are possible. The provided archwires can be packaged and shipped to a practitioner in individual containers indicating the order of use. The archwires could also be packaged and shipped along with one or more sets of customized bondable appliances, such as brackets, buccal tubes and bands. If the archwires and brackets are packaged together, the brackets are optionally provided in a suitable placement device, such as an indirect bonding tray, that is also customized to the patient. As a further option, the brackets in the placement device could be packaged with a suitable orthodontic adhesive, as described for example in U.S. Patent No. 7,137,812 (Cinader et al.).

**Claims**

1. A method of making an orthodontic archwire (210), the method comprising carrying out on a computer the steps of:

    providing a first archwire shape associated with specified positions of a patient's teeth;
    defining a permissible range for an interference parameter relating to archwire shape (916) that provides adequate archwire sliding within an archwire slot (222) having a predetermined dimension, wherein the interference parameter is based on an arch length discrepancy;
    determining that the first archwire shape has an interference parameter that extends outside the permissible range; and
    modifying at least a portion of the first archwire shape whose interference parameter extends outside the permissible range to an archwire shape whereby the interference parameter no longer extends outside the permissible range by adjusting arch length of the first archwire shape by isometrically scaling the first archwire shape to reduce the arch length discrepancy.

2. The method of claim 1, wherein the specified positions are desired positions of the patient's teeth.

3. The method of claim 1, further comprising manufacturing the archwire in accordance with the modified archwire shape.

4. A method of making an orthodontic archwire (210), the method comprising carrying out on a computer the steps of :

    providing a first archwire shape associated with specified positions of a patient's teeth;
    defining a permissible range for an interference parameter relating to archwire shape that provides adequate archwire sliding within an archwire slot having a predetermined dimension;
    determining that the first archwire shape has an interference parameter that extends outside the permissible range; and
    modifying at least a portion of the first archwire shape whose interference parameter extends outside the permissible range to an archwire shape (916) whereby the interference parameter no longer extends outside the permissible range, wherein modifying at least a portion of the first archwire shape comprises:

determining the location and orientation of one or more segments (206) of the first archwire shape with the archwire placed on maloccluded teeth, wherein the location and orientation of the one or more segments (206) are constrained such that the one or more segments are substantially coplanar;

determining the location and orientation of the one or more segments with the archwire placed on teeth in specified positions; and

replacing at least a portion of the first archwire shape with at least a portion of a second archwire shape defined by the location and orientation of the segments associated with the maloccluded and specified teeth positions.

5. The method of claim 4, wherein the specified positions are desired positions of the patient's teeth.

6. The method of claim 4, further comprising manufacturing the archwire in accordance with the modified archwire shape.

7. A method of making an orthodontic archwire (210), the method comprising carrying out on a computer the steps of:

providing a first archwire shape associated with specified positions of a patient's teeth;

defining a permissible range for an interference parameter relating to archwire shape that provides adequate archwire sliding within an archwire slot having a predetermined dimension;

determining that the first archwire shape has an interference parameter that extends outside the permissible range; and

modifying at least a portion of the first archwire shape whose interference parameter extends outside the permissible range to an archwire shape (916) whereby the interference parameter no longer extends outside the permissible range, wherein modifying at least a portion of the first archwire shape comprises:

determining the location and orientation of one or more segments (206) of the first archwire shape with the archwire placed on maloccluded teeth;

determining the location and orientation of the one or more segments with the archwire placed on teeth in specified positions;

replacing at least a portion of the first archwire shape with at least a portion of a second archwire shape defined by the location and orientation of the segments associated with the maloccluded and specified teeth positions; and

defining a geometric deviation index, wherein replacing at least a portion of the first archwire shape with at least a portion of the second archwire shape is contingent on the deviation index between at least a portion of the first and second archwire shapes falling within a predetermined range.

8. The method of claim 7, wherein the specified positions are desired positions of the patient's teeth.

9. The method of claim 7, further comprising manufacturing the archwire in accordance with the modified archwire shape.

**Patentansprüche**

1. Verfahren zur Herstellung eines kieferorthopädischen Bogendrahtes (210), wobei das Verfahren das Ausführen der folgenden Schritte auf einem Computer umfasst:

das Bereitstellen einer ersten Bogendrahtform, die bestimmten Positionen der Zähne eines Patienten zugeordnet ist;

das Definieren eines zulässigen Bereichs für einen Störungsparameter in Bezug auf die Bogendrahtform (916), der ein ausreichendes Gleiten des Bogendrahtes innerhalb eines Bogendrahtschlitzes (222) mit einer vorbestimmten Abmessung bereitstellt, wobei der Störungsparameter auf einer Abweichung der Bogenlänge basiert;

das Ermitteln, dass die erste Bogendrahtform einen Störungsparameter aufweist, der sich außerhalb des zulässigen Bereichs erstreckt; und

das Ändern mindestens eines Abschnitts der ersten Bogendrahtform, deren Störungsparameter sich außerhalb des zulässigen Bereichs erstreckt, in eine Bogendrahtform, wodurch sich der Störungsparameter nicht mehr außerhalb des zulässigen Bereichs erstreckt, indem die Bogenlänge der ersten Bogendrahtform durch isometrisches Skalieren der ersten Bogendrahtform angepasst wird, um die Abweichung der Bogenlänge zu reduzieren.

**2.** Verfahren nach Anspruch 1, wobei die bestimmten Positionen gewünschte Positionen der Zähne des Patienten sind.

**3.** Verfahren nach Anspruch 1, ferner umfassend das Herstellen des Bogendrahtes in Übereinstimmung mit der geänderten Bogendrahtform.

**4.** Verfahren zur Herstellung eines kieferorthopädischen Bogendrahtes (210), wobei das Verfahren das Ausführen der folgenden Schritte auf einem Computer umfasst:

das Bereitstellen einer ersten Bogendrahtform, die bestimmten Positionen der Zähne eines Patienten zugeordnet ist;
das Definieren eines zulässigen Bereichs für einen Störungsparameter in Bezug auf die Bogendrahtform, der ein ausreichendes Gleiten des Bogendrahtes innerhalb eines Bogendrahtschlitzes mit einer vorbestimmten Abmessung bereitstellt;
das Ermitteln, dass die erste Bogendrahtform einen Störungsparameter aufweist, der sich außerhalb des zulässigen Bereichs erstreckt; und
das Ändern mindestens eines Abschnitts der ersten Bogendrahtform, deren Störungsparameter sich außerhalb des zulässigen Bereichs erstreckt, zu einer Bogendrahtform (916), wodurch der Störungsparameter sich nicht mehr außerhalb des zulässigen Bereichs erstreckt, wobei das Ändern mindestens eines Abschnitts der ersten Bogendrahtform Folgendes umfasst:

das Bestimmen der Position und Ausrichtung eines oder mehrerer Segmente (206) der ersten Bogendrahtform mit dem Bogendraht, wobei der Bogendraht auf schlecht schließenden Zähnen angeordnet ist, wobei die Position und die Ausrichtung des einen oder der mehreren Segmente (206) derart eingeschränkt sind, dass das eine oder die mehreren Segmente im Wesentlichen koplanar sind;
das Bestimmen der Position und Ausrichtung des einen oder der mehreren Segmente mit dem Bogendraht, der auf Zähnen in bestimmten Positionen angeordnet ist; und
das Ersetzen mindestens eines Abschnitts der ersten Bogendrahtform durch mindestens einen Abschnitt einer zweiten Bogendrahtform, die durch die Position und Ausrichtung der Segmente definiert ist, die den schlecht schließenden und bestimmten Zahnpositionen zugeordnet sind.

**5.** Verfahren nach Anspruch 4, wobei die bestimmten Positionen gewünschte Positionen der Zähne des Patienten sind.

**6.** Verfahren nach Anspruch 4, ferner umfassend das Herstellen des Bogendrahtes in Übereinstimmung mit der geänderten Bogendrahtform.

**7.** Verfahren zur Herstellung eines kieferorthopädischen Bogendrahtes (210), wobei das Verfahren das Ausführen der folgenden Schritte auf einem Computer umfasst:

das Bereitstellen einer ersten Bogendrahtform, die bestimmten Positionen der Zähne eines Patienten zugeordnet ist;
das Definieren eines zulässigen Bereichs für einen Störungsparameter in Bezug auf die Bogendrahtform, der ein angemessenes Gleiten des Bogendrahtes innerhalb eines Bogendrahtschlitzes mit einer vorbestimmten Abmessung bereitstellt;
das Bestimmen, dass die erste Bogendrahtform einen Störungsparameter aufweist, der sich außerhalb des zulässigen Bereichs erstreckt; und
das Ändern mindestens eines Abschnitts der ersten Bogendrahtform, deren Störungsparameter sich außerhalb des zulässigen Bereichs erstreckt, zu einer Bogendrahtform (916), wodurch der Störungsparameter sich nicht mehr außerhalb des zulässigen Bereichs erstreckt, wobei das Ändern mindestens eines Abschnitts der ersten Bogendrahtform Folgendes umfasst:

das Bestimmen der Position und Ausrichtung eines oder mehrerer Segmente (206) der ersten Bogendrahtform, wobei der Bogendraht auf schlecht schließenden Zähnen angeordnet ist;
das Bestimmen der Position und Ausrichtung des einen oder der mehreren Segmente mit dem Bogendraht, der auf Zähnen in bestimmten Positionen angeordnet ist;
das Ersetzen mindestens eines Abschnitts der ersten Bogendrahtform durch mindestens einen Abschnitt einer zweiten Bogendrahtform, die durch die Position und Ausrichtung der Segmente definiert ist, die den schlecht schließenden und bestimmten Zahnpositionen zugeordnet sind; und

das Definieren eines geometrischen Abweichungsindexes, wobei das Ersetzen mindestens eines Abschnitts der ersten Bogendrahtform durch mindestens einen Abschnitt der zweiten Bogendrahtform davon abhängig ist, dass der Abweichungsindex zwischen mindestens einem Abschnitt der ersten und zweiten Bogendrahtform in einen vorbestimmten Bereich fällt.

**8.** Verfahren nach Anspruch 7, wobei die bestimmten Positionen gewünschte Positionen der Zähne des Patienten sind.

**9.** Verfahren nach Anspruch 7, ferner umfassend das Herstellen des Bogendrahtes in Übereinstimmung mit der geänderten Bogendrahtform.

**Revendications**

**1.** Procédé de fabrication d'un arc dentaire orthodontique (210), le procédé comprenant la réalisation sur un ordinateur des étapes consistant à :

fournir une première forme d'arc dentaire associée à des positions spécifiées des dents d'un patient ;

définir une plage admissible pour un paramètre d'interférence se rapportant à une forme d'arc dentaire (916) qui fournit un coulissement adéquat d'arc dentaire au sein d'une encoche d'arc dentaire (222) ayant une dimension prédéterminée, dans lequel le paramètre d'interférence est basé sur une discordance de longueur d'arc ;

déterminer que la première forme d'arc dentaire a un paramètre d'interférence qui s'étend à l'extérieur de la plage admissible ; et

modifier au moins une partie de la première forme d'arc dentaire dont le paramètre d'interférence s'étend à l'extérieur de la plage admissible en une forme d'arc dentaire selon laquelle le paramètre d'interférence ne s'étend plus à l'extérieur de la plage admissible en réglant la longueur d'arc de la première forme d'arc dentaire par mise à l'échelle isométrique de la première forme d'arc dentaire pour réduire la discordance de longueur d'arc.

**2.** Procédé selon la revendication 1, dans lequel les positions spécifiées sont des positions souhaitées des dents du patient.

**3.** Procédé selon la revendication 1, comprenant en outre la fabrication de l'arc dentaire conformément à la forme d'arc dentaire modifiée.

**4.** Procédé de fabrication d'un arc dentaire orthodontique (210), le procédé comprenant la réalisation sur un ordinateur des étapes consistant à :

fournir une première forme d'arc dentaire associée à des positions spécifiées des dents d'un patient ;

définir une plage admissible pour un paramètre d'interférence se rapportant à une forme d'arc dentaire qui fournit un coulissement adéquat d'arc dentaire au sein d'une encoche d'arc dentaire ayant une dimension prédéterminée ;

déterminer que la première forme d'arc dentaire a un paramètre d'interférence qui s'étend à l'extérieur de la plage admissible ; et

modifier au moins une partie de la première forme d'arc dentaire dont le paramètre d'interférence s'étend à l'extérieur de la plage admissible en une forme d'arc dentaire (916) selon laquelle le paramètre d'interférence ne s'étend plus à l'extérieur de la plage admissible, dans lequel la modification d'au moins une partie de la première forme d'arc dentaire comprend :

déterminer l'emplacement et l'orientation d'un ou plusieurs segments (206) de la première forme d'arc dentaire avec l'arc dentaire placé sur des dents mal occluses, dans lequel l'emplacement et l'orientation du ou des segments (206) sont contraints de telle sorte que le ou les segments sont essentiellement coplanaires ;

déterminer l'emplacement et l'orientation du ou des segments avec l'arc dentaire placé sur les dents dans des positions spécifiées ; et

remplacer au moins une partie de la première forme d'arc dentaire par au moins une partie d'une deuxième forme d'arc dentaire définie par l'emplacement et l'orientation des segments associés aux positions de dents mal occluses et spécifiées.

**5.** Procédé selon la revendication 4, dans lequel les positions spécifiées sont des positions souhaitées des dents du patient.

**6.** Procédé selon la revendication 4, comprenant en outre la fabrication de l'arc dentaire conformément à la forme d'arc dentaire modifiée.

**7.** Procédé de fabrication d'un arc dentaire orthodontique (210), le procédé comprenant la réalisation sur un ordinateur des étapes consistant à :

fournir une première forme d'arc dentaire associée à des positions spécifiées des dents d'un patient ;
définir une plage admissible pour un paramètre d'interférence se rapportant à une forme d'arc dentaire qui fournit un coulissement adéquat d'arc dentaire au sein d'une encoche d'arc dentaire ayant une dimension prédéterminée ;
déterminer que la première forme d'arc dentaire a un paramètre d'interférence qui s'étend à l'extérieur de la plage admissible ; et
modifier au moins une partie de la première forme d'arc dentaire dont le paramètre d'interférence s'étend à l'extérieur de la plage admissible en une forme d'arc dentaire (916) selon laquelle le paramètre d'interférence ne s'étend plus à l'extérieur de la plage admissible, dans lequel la modification d'au moins une partie de la première forme d'arc dentaire comprend :

déterminer l'emplacement et de l'orientation d'un ou plusieurs segments (206) de la première forme d'arc dentaire avec l'arc dentaire placé sur des dents mal occluses ;
déterminer l'emplacement et l'orientation du ou des segments avec l'arc dentaire placé sur les dents dans des positions spécifiées ;
remplacer au moins une partie de la première forme d'arc dentaire par au moins une partie d'une deuxième forme d'arc dentaire définie par l'emplacement et l'orientation des segments associés aux positions de dents mal occluses et spécifiées ; et
définir un indice de déviation géométrique, dans lequel le remplacement d'au moins une partie de la première forme d'arc dentaire par au moins une partie de la deuxième forme d'arc dentaire est subordonné à l'indice de déviation entre au moins une partie des première et deuxième formes d'arc dentaire se situant dans une plage prédéterminée.

**8.** Procédé selon la revendication 7, dans lequel les positions spécifiées sont des positions souhaitées des dents du patient.

**9.** Procédé selon la revendication 7, comprenant en outre la fabrication de l'arc dentaire conformément à la forme d'arc dentaire modifiée.

*Fig. 1*

START

PROPOSE ARCHWIRE SHAPE — 50

DEFINE LIMIT THAT CONSTRAINS ARCHWIRE SHAPE PARAMETER — 52

DETERMINE SHAPE PARAMETER FOR CURRENT ARCHWIRE SHAPE — 54

DOES SHAPE PARAMETER EXCEED DEFINED LIMIT? — 56

58

REVISE CURRENT ARCHWIRE SHAPE

MANUFACTURE ARCHWIRE BASED ON CURRENT ARCHWIRE SHAPE — 60

END

*Fig. 2*

*Fig. 3*

*Fig. 4*

Fig. 5

Fig. 6

Fig. 7

*Fig. 8*

*Fig. 9*

*Fig. 10*

*Fig. 11*

*Fig. 12*

**Fig. 13a**

**Fig. 13b**

**Fig. 14a**

**Fig. 14b**

*Fig. 15*

*Fig. 16*

REFERENCES CITED IN THE DESCRIPTION

**Patent documents cited in the description**

- US 20060073436 A
- WO 2007084727 A, Boerjes
- US 20070031791 A, Cinader
- US 61444664 A, See
- US 6632089 B, Rubbert
- US 6371761 B, Cheang
- US 7245750 B, Cermak
- US 6227851 B, Chishti
- US 6394801 B, Chishti
- US 6499997 B, Chishti
- US 6776614 B, Wiechmann
- US 6928733 B, Rubbert
- WO 0180761 A, Rubbert
- US 6214285 B, Rubbert
- US 7137812 B, Cinader